# FASCICULE DE BREVET EUROPEEN

(11) **EP 4 621 201 B1**
(45) Date de publication et mention de la délivrance du brevet: **29.04.2026**
(21) Numéro de dépôt: 25162031.6
(22) Date de dépôt: 06.03.2025
(51) Int. Cl.: F02C 7/047

(54) **LÈVRE D'ENTRÉE D'AIR DE NACELLE DE MOTEUR D'AÉRONEF POURVUE D'UN DISPOSITIF D'OBTURATION PASSIF DE DISPOSITIF D'ÉCHAPPEMENT**
LUFTEINLASSLIPPE FÜR EINE FLUGZEUGTRIEBWERKSGONDEL MIT PASSIVER ABGASVORRICHTUNGSDICHTUNG
AIRCRAFT ENGINE NACELLE AIR INTAKE LIP PROVIDED WITH A DEVICE FOR PASSIVELY SEALING AN EXHAUST DEVICE

(30) Priorité: 22.03.2024 FR 2402877
(43) Date de publication de la demande: 24.09.2025
(73) Titulaire: AIRBUS OPERATIONS (S.A.S.), 31060 Toulouse (FR)
(72) Inventeur: PRZYBYLA, Benoit, 31060 TOULOUSE Cedex 9 (FR); FULARA, Szymon, 31060 TOULOUSE Cedex 9 (FR)
(74) Mandataire: Airbus-OPS SAS

(56) Documents cités:
- EP-A1- 3 597 540
- WO-A1-2022/136318
- CN-B- 114 560 090
- US-A1- 2016 017 751
- US-A1- 2020 130 815

## Description

### Domaine technique

La présente invention concerne une lèvre d'entrée d'air de nacelle de moteur d'aéronef pourvue d'un dispositif d'obturation passif de dispositif d'échappement. En cas de besoin (prévention contre la formation de givre ou élimination de givre déjà formé), le bord d'attaque de la lèvre d'entrée d'air de moteurs d'aéronef est dégivré par réchauffement par de l'air chaud sous pression, prélevé sur ledit moteur et amené audit bord d'attaque par un circuit de circulation d'air chaud sous pression. Un exemple d'un tel dispositif de dégivrage est représenté dans le brevet EP1186533.

Le document EP3597540A1 décrit un dispositif de perturbation du flux d'air pour un orifice d'échappement d'air de prélèvement d'un moteur à turbine à gaz, comprenant une plaque de perturbation montée de manière rotative en amont d'un orifice d'échappement d'un conduit d'échappement. Un actionneur est couplé à la plaque de perturbation et adapté pour faire tourner la plaque de perturbation dans un flux d'air externe en réponse à la température du flux d'échappement dans l'orifice d'échappement, de sorte que le flux d'air externe est turbulé en amont de l'orifice l'échappement.

A cet effet, une telle lèvre d'entrée d'air comporte, de façon connue, un bord d'attaque creux délimitant une chambre périphérique annulaire interne, fermée par une cloison interne (ou cadre) et pourvue d'au moins un orifice mettant en communication ladite chambre interne avec l'extérieur. De plus, une conduite d'alimentation en air chaud est raccordée, du côté arrière opposé audit bord d'attaque, à un circuit de circulation d'air chaud sous pression et, du côté avant vers le bord d'attaque, à un injecteur injectant un flux dudit air chaud sous pression dans la chambre annulaire.

Ainsi, ledit flux d'air chaud circule dans ladite chambre annulaire en la réchauffant avant de s'échapper à l'extérieur à travers ledit orifice de communication. Plusieurs orifices sont prévus dans ledit bord d'attaque pour l'évacuation à l'air libre de l'air chaud ayant circulé à l'intérieur du bord d'attaque.

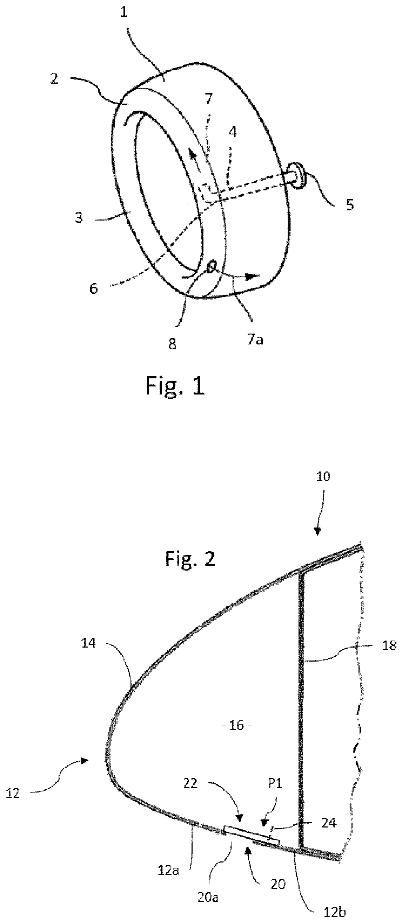

Comme représenté schématiquement sur la [Fig. 1], une nacelle 1 de moteur d'aéronef comporte une lèvre d'entrée d'air 2. La lèvre 2 comporte un bord d'attaque creux 3 dans lequel circule l'air chaud prélevé sur le moteur.

La nacelle 1 comprend de plus une conduite interne 4, pourvue à son extrémité arrière, dirigée vers le corps du moteur (non représenté), d'un élément de raccord 5 et à son extrémité avant, logée dans le bord d'attaque creux 3 de l'entrée d'air 2, d'un injecteur 6. De l'air chaud sous pression est prélevé sur le moteur et est injecté, par l'intermédiaire de la conduite interne 4 et de l'injecteur 6 dans le bord d'attaque creux 3 de la lèvre d'entrée d'air 2.

L'injecteur 6 injecte dans le conduit intérieur de la lèvre 2, un flux d'air chaud 7 qu'il reçoit de la conduite 4. L'air chaud 7 circule à l'intérieur du bord d'attaque 3 et le réchauffe, ce qui permet de dégivrer ledit bord d'attaque.

Un dispositif d'échappement d'air chaud est utilisé pour évacuer l'air chaud de dégivrage en dehors du bord d'attaque 3 et ne pas dépasser la capabilité thermique des matériaux constituants ledit bord 3. Ce dispositif se présente sous la forme d'orifices 8 répartis dans le bord d'attaque 3 de la lèvre 2 pour l'évacuation à l'air libre (flèche 7a) de l'air chaud ayant circulé à l'intérieur dudit bord d'attaque 3. Les orifices 8 peuvent être calibrés pour ne permettre l'évacuation vers l'extérieur que d'une partie du flux d'air chaud en circulation dans le bord d'attaque creux 3, l'autre partie dudit flux étant amenée à recirculer dans ledit bord d'attaque 3.

Ces orifices 8, en raison de leur taille, de leur emplacement et de la différence de pression entre l'intérieur et l'extérieur de la lèvre 2, nuisent aux performances de l'aéronef, notamment durant les phases de décollage, de montée, de descente ou d'atterrissage car ils provoquent une traînée parasite. De plus, ces orifices engendrent des perturbations aérodynamiques se traduisant pas des effets acoustiques supplémentaires et désagréables durant les phases de vol précitées.

Or, il n'est généralement pas nécessaire de dégivrer la lèvre d'entrée d'air durant ces phases de vol.

Il existe donc un besoin pour un dispositif d'échappement de l'air chaud pour évacuer l'air chaud de dégivrage du bord d'attaque circulant dans la lèvre d'entrée d'air qui engendre moins d'impacts sur les performances de l'aéronef et qui présente une empreinte acoustique réduite.

La présente invention vise à remédier à tout ou partie des inconvénients de l'art antérieur.

### RESUME

A cet effet, l'invention a trait à une lèvre d'entrée d'air de nacelle de moteur d'aéronef pourvue d'un bord d'attaque creux délimitant une chambre périphérique annulaire interne fermée par une cloison interne dans lequel circule de l'air chaud sous pression, ledit bord d'attaque creux étant pourvu d'au moins un dispositif d'échappement d'air chaud pour permettre l'évacuation vers l'extérieur de tout ou partie dudit flux d'air chaud en circulation dans ladite chambre annulaire et au moins un dispositif d'obturation passif dudit au moins un dispositif d'échappement, ledit au moins un dispositif d'obturation passif étant remarquable en ce qu'il est mobile entre une position d'obturation dans laquelle ledit au moins un dispositif d'obturation passif obture ledit au moins un dispositif d'échappement et une position d'ouverture dans laquelle ledit au moins un dispositif d'obturation passif libère ledit au moins un dispositif d'échappement, ledit au moins un dispositif d'obturation passif étant réalisé dans un matériau à mémoire de forme.

Ainsi, la présente invention permet d'obturer les dispositifs d'échappement lors des phases de vol pendant lesquelles le dégivrage de la lèvre d'entrée d'air n'est pas actif et d'autoriser l'évacuation de l'air chaud sous pression uniquement lors des phases de vol nécessitant le dégivrage de la lèvre d'entrée d'air. Ce faisant, la traînée parasite et l'empreinte acoustique sont fortement diminuées.

Selon des modes particuliers de réalisation, l'outil comporte d'autres caractéristiques remarquables prises séparément ou en combinaison :
Dans un mode de réalisation particulièrement simple, ledit au moins un dispositif d'obturation passif se présente sous la forme d'une pièce complémentaire à celle du au moins un dispositif d'échappement.

Ledit au moins un dispositif d'obturation passif est apte à se déformer à partir d'une température de transition prédéterminée T_{D}.

Ledit au moins un dispositif d'obturation passif est apte à occuper la position d'obturation dès que la température dans la chambre périphérique annulaire interne est inférieure à la température de transition prédéterminée T_{D}.

Ledit au moins un dispositif d'obturation passif est apte à occuper la position d'ouverture tant que la température dans la chambre périphérique annulaire interne est supérieure à la température de transition prédéterminée T_{D} + Δ°C.

Ledit au moins un dispositif d'échappement se présente sous la forme d'un orifice d'échappement apte à évacuer l'air chaud sous pression de la chambre périphérique annulaire interne.

Ledit au moins un dispositif d'échappement se présente sous la forme d'une grille d'échappement comportant plusieurs orifices d'échappement aptes à évacuer l'air chaud sous pression de la chambre périphérique annulaire interne.

On notera que, dans le cadre de la présente invention, ledit au moins un dispositif d'obturation passif peut présenter la forme d'une lame disposée en regard de chaque orifice d'échappement.

Ledit au moins un dispositif d'obturation passif comporte autant de lames que d'orifices d'échappement.

Ledit au moins un dispositif d'obturation passif se présente sous la forme d'une plaque unique dont les dimensions sont adaptées pour recouvrir la totalité des orifices d'échappement de la grille d'échappement.

De préférence, ledit au moins un dispositif d'obturation passif comporte au moins une excroissance adaptée pour obturer ledit au moins un dispositif d'échappement. Ainsi, le dispositif d'obturation passif obture efficacement le dispositif d'échappement et évite toute fuite d'air entraînant une perturbation d'écoulement externe lorsque le dispositif d'obturation passif est dans la position d'obturation.

L'invention a également pour objet un aéronef comprenant une entrée d'air selon l'une des caractéristiques précédentes.

D'autres particularités et avantages du dispositif selon l'invention ressortiront mieux à la lecture de la description faite ci-après, à titre indicatif mais non limitatif, en référence aux dessins annexés sur lesquels :
[Fig. 1] représente une nacelle d'entrée d'air de moteur d'aéronef selon l'art antérieur.
[Fig. 2] représente une vue en coupe d'une nacelle d'entrée d'air de moteur d'aéronef comportant un dispositif d'obturation passif selon l'invention, le dispositif d'obturation passif étant en position d'obturation.
[Fig. 3] représente une vue en coupe d'une nacelle d'entrée d'air de moteur d'aéronef comportant un dispositif d'obturation passif selon l'invention, le dispositif d'obturation passif étant en position ouverte.
[Fig. 4] représente une vue agrandie d'un dispositif d'obturation passif selon une variante de l'invention.
[Fig. 5] représente un graphe de la déformation du dispositif d'obturation passif selon l'invention.
[Fig. 6] représente une vue de dessus d'un mode particulier de réalisation du dispositif d'obturation selon l'invention, adapté à un dispositif d'échappement différent de celui représenté dans les figures précédentes.
[Fig. 7] représente une première variante de réalisation du dispositif d'obturation passif selon l'invention.
[Fig. 8] représente une seconde variante de réalisation du dispositif d'obturation passif selon l'invention.

La [Fig. 2] représente une nacelle 10 de moteur d'aéronef pourvue d'une lèvre d'entrée d'air 12. La lèvre d'entrée d'air 12 comporte un bord d'attaque creux 14 délimitant une chambre périphérique annulaire interne 16 fermée par une cloison interne 18 dans lequel circule de l'air chaud sous pression. Cet air chaud sous pression est prélevé sur le moteur de l'aéronef et amené par tous moyens connus de l'homme du métier dans la chambre périphérique annulaire interne 16 de la lèvre d'entrée d'air 12.

L'air chaud prélevé sur le moteur a pour but, lorsque les conditions d'opérations de l'aéronef le demandent, de dégivrer le bord d'attaque 14 de la lèvre d'entrée d'air 12, cet air chaud devant être évacuer pour diminuer les contraintes thermiques sur les matériaux constituants le bord d'attaque 14.

A cette fin, le bord d'attaque creux 14 est pourvu d'au moins un dispositif d'échappement 20 pour permettre l'évacuation vers l'extérieur de tout ou partie dudit flux d'air chaud en circulation dans ladite chambre annulaire 16. Le bord d'attaque 14 peut disposer de plusieurs dispositifs d'échappement 20 répartis sur toute la périphérie du bord d'attaque 14 ou répartis uniquement sur une portion dudit bord d'attaque. Dans l'exemple représenté sur la [Fig. 2], un seul dispositif d'échappement 20 est représenté : il est réalisé dans la paroi de la lèvre d'entrée d'air 12, entre une première portion 12a et une deuxième portion 12b de la lèvre 12. Dans cet exemple, le dispositif d'échappement 20 se présente sous la forme d'un orifice d'échappement 20a.

Cependant, ces dispositifs d'échappement 20 ne sont pas nécessaires tout au long du vol. Ils nuisent aux performances de l'aéronef, notamment durant les phases de décollage, de montée, de descente ou d'atterrissage et engendrent même des nuisances sonores désagréables pour les riverains des aéroports.

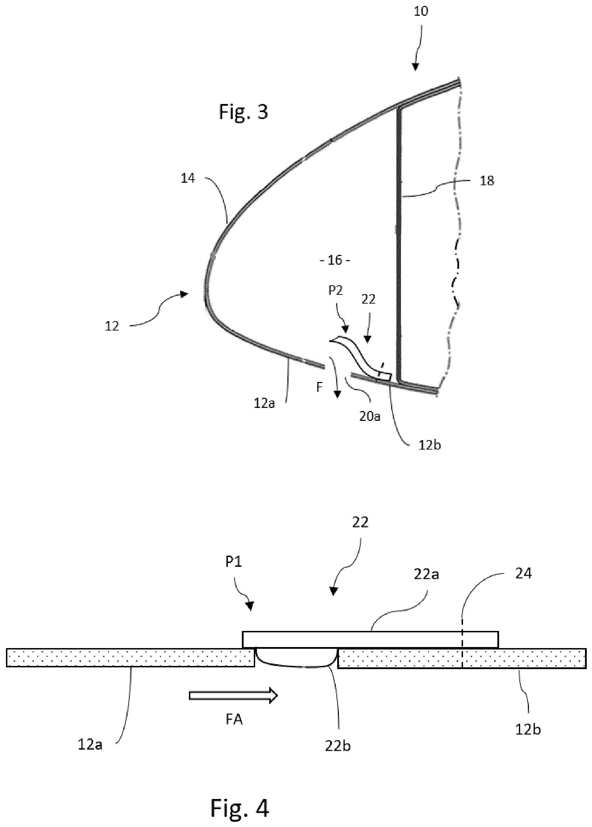

Pour éviter ces désagréments, le bord d'attaque creux 14 est pourvue d'au moins un dispositif d'obturation passif 22 mobile entre une position d'obturation P1 (représentée sur la [Fig. 2]) dans laquelle le dispositif d'obturation passif 22 obture le dispositif d'échappement 20 et une position d'ouverture P2 (représentée sur la [Fig. 3]) dans laquelle le dispositif d'obturation passif 22 libère ledit dispositif d'échappement 20.

Le dispositif d'obturation passif 22 est fixé sur le bord d'attaque creux 14 par tout moyen de fixation 24 connu et approprié. Le moyen de fixation 24 peut être fixé sur la première portion 12a ou sur la deuxième portion 12b de la lèvre 12.

Le dispositif d'obturation passif 22 est réalisé dans un matériau à mémoire de forme, c'est-à-dire que le dispositif 22 peut mémoriser et récupérer sa forme originale après une déformation importante suite à un stimulus externe particulier tel que la température. La forme du dispositif 22 peut donc alterner entre deux formes préalablement mémorisées lorsque sa température varie autour d'une température de transition prédéterminée T_{D} : une première forme dite de repos qui correspond à la position d'obturation P1 et une deuxième forme dite de déformation qui correspond à la position d'ouverture P2. En d'autres termes, le dispositif 22 change de forme selon la température à laquelle il est soumis. Le matériau NiTi, alliage de nickel et de titane présente des telles caractéristiques. Le Nitinol ^{®} disposant de ces caractéristiques peut être utilisé pour fabriquer le dispositif d'obturation passif 22.

La température de transition prédéterminée T_{D} est calculée en fonction de la température maximale régnant dans la chambre périphérique annulaire interne 16. La transition entre la position P1 et la position P2 pourra s'effectuer rapidement ou de manière progressive en fonction du besoin relatif à l'évacuation de l'air chaud. Tous ces paramètres sont liés aux caractéristiques du matériau à mémoire de forme (pourcentage de titane et de nickel par exemple) et sont connus de l'homme du métier.

La température de transition prédéterminée T_{D} peut être comprise entre 70°C et 90°C, préférentiellement de l'ordre de 80°C.

En conséquence, dans des situations où un dégivrage du bord d'attaque 14 n'est pas nécessaire, la température dans la chambre périphérique annulaire interne 16 sera la température ambiante à l'intérieur du bord d'attaque 14. Dans cette situation, il est intéressant d'obturer les dispositifs d'échappement 20 afin de ne pas générer de traînée ou de bruit parasites. Le dispositif d'obturation passif 22 occupera donc la position d'obturation P1. Dans cette configuration représentée sur la [Fig.2], le dispositif 22 obture l'orifice d'échappement 20a.

A contrario, lorsque l'aéronef rencontre des conditions givrantes nécessitant un dégivrage du bord d'attaque 14 de la lèvre 12, de l'air chaud sous pression prélevé sur le moteur est amené pour tous moyens connus et adaptés vers la chambre périphérique annulaire interne 16 et injecté dans celle-ci. Ce faisant, la température dans la chambre annulaire 16 augmente. Cette augmentation de température agit sur le dispositif d'obturation passif 22, l'amenant à changer de forme. Le dispositif d'obturation 22 passe de sa forme dite de repos à sa forme dite de déformation. Ainsi la forme du dispositif 22 est modifiée ; il s'écarte du dispositif d'échappement 20 et le libère, permettant l'évacuation de l'air chaud sous pression présent dans la chambre annulaire 16 (flèche F). Le dispositif d'obturation passif 22 occupe alors la position d'ouverture P2 représentée sur la [Fig. 3]. Dans cette configuration représentée sur la [Fig.3], le dispositif 22 libère l'orifice d'échappement 20a.

Le dispositif d'obturation passif 22 se présente sous la forme d'une pièce complémentaire à celle des dispositifs d'échappement 20 de manière à obturer ce dernier lorsque le dispositif 22 est dans la position d'obturation P1.

Selon un mode particulier de réalisation, le dispositif d'obturation passif 22 présente la forme d'une lame 22a dont les dimensions sont adaptées pour obturer les dispositifs d'échappement 20 lorsque le dispositif 22 est dans la position d'obturation P1. La forme de la lame 22a est complémentaire à celle des dispositifs d'échappement 20. En position d'obturation P1, la lame 22a se positionne sur les dispositifs d'échappement 20 de façon à les obturer.

Selon une autre mode de réalisation de l'invention décrite dans la [Fig. 4], le dispositif d'obturation passif 22 comporte une excroissance 22b adaptée pour obturer lesdits dispositifs d'échappement 20. L'excroissance 22b est dimensionnée de manière à s'adapter à la géométrie de chaque dispositif d'échappement 20. Les dimensions de l'excroissance 22b sont aussi calculées afin qu'elle ne dépasse pas de la paroi de la lèvre 12, ceci dans le but de ne pas perturber l'écoulement du flux aérodynamique vu par la lèvre 12 (flèche FA). Ainsi, le dispositif d'obturation passif 22 obture efficacement le dispositif d'échappement 20 et évite toute fuite d'air lorsque le dispositif d'obturation 22 est dans la position d'obturation P1.

L'excroissance 22b peut être réalisée dans un matériau déformable afin d'épouser au plus près la forme des dispositifs d'échappement 20. Le Nitinol ^{®}, par exemple, peut être utilisé pour fabriquer l'excroissance 22b.

Lorsque la température ambiante de la chambre périphérique annulaire interne 16 est inférieure à la température de transition prédéterminée T_{D}, le bord d'attaque 14 de la lèvre 12 ne nécessite pas de dégivrage. Aucune évacuation d'air chaud sous pression n'est alors requise. En conséquence, le dispositif d'obturation passif 22 n'est pas déformé, il conserve sa forme originale et occupe la position d'obturation P1 : il obture donc les dispositifs d'échappement 20.

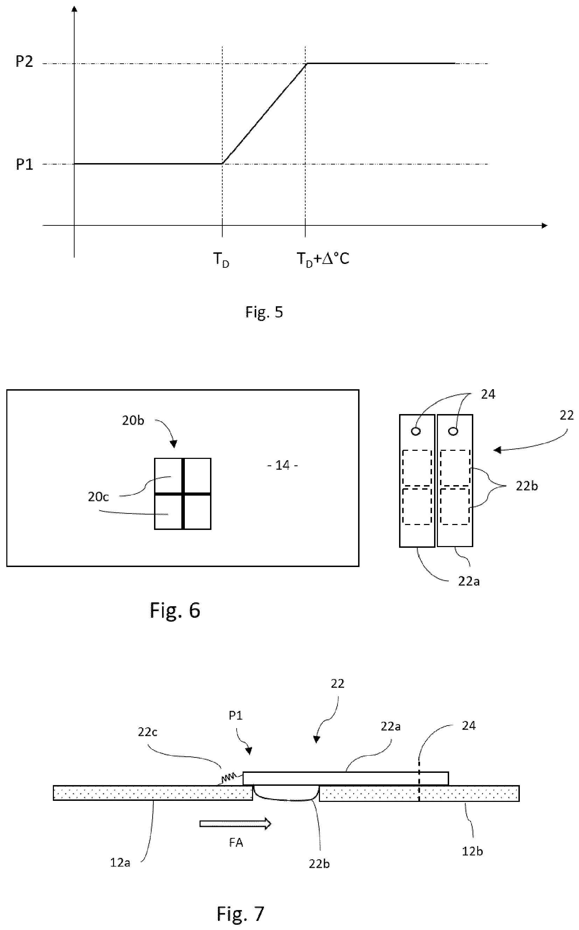

Le comportement du dispositif d'obturation passif 22 va maintenant être décrit en détail, en référence à la [Fig. 5]. Lorsque l'aéronef rencontre des conditions nécessitant le dégivrage du bord d'attaque 14 de la lèvre 12, de l'air chaud sous pression est prélevé sur le moteur, amené pour tous moyens connus et adaptés vers la chambre périphérique annulaire interne 16 et injecté dans celle-ci. La température dans la chambre 16 augmente progressivement afin de dégivrer le bord d'attaque 14. Ce faisant, le dispositif d'obturation passif 22 est soumis à l'augmentation de température ambiante et commence à se déformer. Lorsque la température ambiante devient supérieure à la température de transition prédéterminée T_{D} + Δ°C, le dispositif d'obturation passif 22 se déforme et présente sa forme dite de déformation. Il occupe donc la position d'ouverture P2. Tant que la température ambiante de la chambre 16 reste supérieure à la température de transition prédéterminée T_{D} + Δ°C, le dispositif 22 conserve sa position d'ouverture P2. Si les conditions d'opération de l'aéronef ne nécessitent plus de dégivrage, les prélèvements d'air chaud sous pression sur le moteur cessent, et la température ambiante dans la chambre annulaire 16 diminue peu à peu jusqu'à redescendre en-dessous de la température de transition prédéterminée T_{D}. Le dispositif d'obturation passif 22 reprend alors sa forme originale dite de repos. Il occupe alors la position d'obturation P1.

La valeur Δ°C peut être comprise entre 0°C et 30°C.

Selon une première variante de réalisation, le dispositif d'obturation passif 22 comporte un ressort de rappel 22c apte à ramener ledit dispositif dans la position d'obturation P1 ([Fig. 7]). La raideur du ressort 22c est calculée de manière à ce que ledit ressort ne gêne pas la déformation de la lame 22a durant sa transition de la position d'obturation P1 vers la position d'ouverture P2. A l'inverse, durant la transition du dispositif d'obturation 22 de la position d'ouverture P2 vers la position d'obturation P1, le ressort 22c exerce une force de rappel favorisant cette transition et aidant ainsi le dispositif d'obturation 22 à reprendre sa position d'obturation P1.

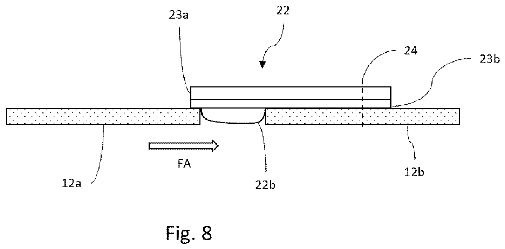

Selon une seconde variante de réalisation représentée sur la [Fig. 8], le dispositif d'obturation passif 22 se compose de deux lames 23a et 23b solidaires l'une avec et l'autre et formées à partir d'un matériau à mémoire de forme ayant des températures de transition différentes. L'avantage d'une telle configuration est d'accélérer l'obturation des dispositifs d'échappement 20, une fois la température ambiante dans la chambre annulaire 16 redescendue en dessous de la température de transition prédéterminée T_{D}.

La température de transition prédéterminée T_{Da} de la lame 23a est inférieure à la température de transition prédéterminée T_{Db} de la lame 23b. Par exemple, pour une température de transition T_{Db} de l'ordre de 80°C de la lame 23b, la température de transition T_{Da} de la lame 23a sera de l'ordre de 70°C. Ainsi, lorsque la température ambiante dans la chambre annulaire 16 augmente jusqu'à atteindre T_{Da}, la lame 23a commence à se déformer avant la lame 23b, entraînant cependant la déformation de la lame 23b. Lorsque la température dans la chambre annulaire 16 atteint T_{Db}, la lame 23b commence à se déformer à son tour, accélérant la déformation du dispositif d'obturation 22 et donc le passage de la position d'obturation P1 à la position d'ouverture P2. Comme précédemment expliqué, le dispositif 22 reste dans la position d'ouverture P2 tant que la température ambiante dans la chambre périphérique annulaire interne 16 est supérieure à T_{Db}+ Δ°C.

A l'inverse, lorsque la température dans la chambre annulaire 16 diminue et redescend en dessous de T_{Db}, la lame 23b se déforme à nouveau pour reprendre sa forme initiale dite de repos, tout comme la lame 23a lorsque la température devient inférieure à T_{Da}, aidant ainsi le dispositif d'obturation 22 à reprendre sa position d'obturation P1.

Dans cette configuration, la lame 23b est fixée à l'entrée d'air 12 lorsque le dispositif d'obturation passif 22 est dans la position d'obturation P1 et la lame 23a est positionnée au-dessus de la lame 23b.

Selon une autre configuration, c'est la lame 23a qui est fixée à l'entrée d'air 12 lorsque le dispositif d'obturation passif 22 est dans la position d'obturation P1, la lame 23b étant positionnée au-dessus de la lame 23a.

Dans le mode de réalisation où le dispositif d'échappement présente la forme d'un orifice d'échappement 20a, le dispositif d'obturation passif 22 peut comporter une excroissance 22b disposée en regard dudit orifice 20a. Cet exemple de réalisation est représenté sur la [Fig. 4]. L'excroissance 22b peut être rajoutée au dispositif d'obturation 22 en même temps que la fabrication du dispositif 22 ou elle peut être rajoutée ultérieurement et fixée audit dispositif 22 par tous moyens de fixation connus de l'homme du métier.

Dans une variante de réalisation schématiquement représentée sur le [Fig. 6], le bord d'attaque 14 de l'entrée d'air 12 comporte au moins un dispositif d'échappement 20 se présentant sous la forme d'une grille d'échappement 20b comportant plusieurs orifices d'échappement 20c pour évacuer l'air chaud de la chambre annulaire 16. Dans ce cas, le dispositif d'obturation passif 22 (représenté sur le côté dans un souci de clarté) comporte autant de lames 22a que d'orifices d'échappement 20c composant la grille d'échappement 20b.

Ces lames 22a peuvent comprendre des excroissances 22b (représentées en pointillé) afin d'obturer plus efficacement les orifices d'échappement 20c. Dans cette variante de réalisation, les lames 22a comportent autant d'excroissances 22b que d'orifices d'échappement 20c.

Chaque lame 22a du dispositif d'obturation passif 22 est fixée sur le bord d'attaque 14 via des moyens de fixation 24.

Dans une variante de réalisation, le dispositif d'obturation passif 22 comporte une plaque unique dont les dimensions sont adaptées pour recouvrir la totalité des orifices d'échappement 20c de la grille d'échappement 20b.

La plaque unique peut comporter des excroissances 22b disposées en regard de chaque orifice d'échappement 20c de la grille d'échappement 20b. Comme dans la variante de réalisation précédente, la plaque comporte autant d'excroissances 22b que d'orifices d'échappement 20c.

Quel que soit le mode de réalisation, chaque dispositif d'obturation passif 22 est apte à recouvrir le dispositif d'échappement 20 au regard duquel il est fixé.

Les avantages d'un tel dispositif d'obturation passif 22 sont nombreux :
- Ce dispositif d'obturation 22 est passif, il ne nécessite pas de source d'énergie spécifique, ni de système actif tel que vérin ou commande de contrôle,
- Il est simple d'utilisation, de montage et de démontage,
- Il autorise l'évacuation de l'air chaud sous pression circulant dans la chambre périphérique annulaire lorsque les conditions le demandent,
- Ce dispositif 22 minimise fortement la traînée et le bruit parasites générés par les dispositifs de l'art antérieur.

## Revendications

1. Lèvre d'entrée d'air (12) pour une nacelle (10) de moteur d'aéronef, la lèvre d'entrée d'air étant pourvue d'un bord d'attaque creux (14) délimitant une chambre périphérique annulaire interne (16) fermée par une cloison interne (18) dans lequel circule de l'air chaud sous pression, ledit bord d'attaque creux (14) étant pourvu d'au moins un dispositif d'échappement (20) d'air chaud pour permettre l'évacuation vers l'extérieur de tout ou partie dudit flux d'air chaud en circulation dans ladite chambre annulaire (16) **caractérisé en ce qu'**elle comporte au moins un dispositif d'obturation passif (22) dudit au moins un dispositif d'échappement (20), où ledit au moins un dispositif d'obturation passif (22) est mobile entre une position d'obturation (P1) dans laquelle ledit au moins un dispositif d'obturation (22) obture ledit au moins un dispositif d'échappement (20) et une position d'ouverture (P2) dans laquelle ledit au moins un dispositif d'obturation passif (22) libère au moins un dispositif d'échappement (20), ledit dispositif d'obturation passif (22) étant réalisé dans un matériau à mémoire de forme.

2. Lèvre d'entrée d'air (12) de nacelle (10) de moteur d'aéronef selon la revendication 1 **caractérisée en ce que** ledit au moins un dispositif d'obturation passif (22) se présente sous la forme d'une pièce complémentaire à celle du au moins un dispositif d'échappement (20).

3. Lèvre d'entrée d'air (12) de nacelle (10) de moteur d'aéronef selon l'une quelconque des revendications précédentes **caractérisée en ce que** ledit au moins un dispositif d'obturation passif (22) est apte à se déformer à partir d'une température de transition prédéterminée (T_{D}).

4. Lèvre d'entrée d'air (12) de nacelle (10) de moteur d'aéronef selon la revendication précédente **caractérisée en ce que** ledit au moins un dispositif d'obturation passif (22) est apte à occuper la position d'obturation (P1) dès que la température dans la chambre périphérique annulaire interne (16) est inférieure à la température de transition prédéterminée (T_{D}).

5. Lèvre d'entrée d'air (12) de nacelle (10) de moteur d'aéronef selon l'une quelconque des revendications 3 ou 4 **caractérisée en ce que** ledit au moins un dispositif d'obturation passif (22) est apte à occuper la position d'ouverture (P2) tant que la température dans la chambre périphérique annulaire interne (16) est supérieure à la température de transition prédéterminée (T_{D})+ Δ°C.

6. Lèvre d'entrée d'air (12) de nacelle (10) de moteur d'aéronef selon l'une quelconque des revendications précédentes **caractérisée en ce qu'**au moins un dispositif d'échappement (20) se présente sous la forme d'un orifice d'échappement (20a) apte à évacuer l'air chaud sous pression de la chambre périphérique annulaire interne (16).

7. Lèvre d'entrée d'air (12) de nacelle (10) de moteur d'aéronef selon l'une quelconque des revendications précédentes **caractérisée en ce qu'**au moins un dispositif d'échappement (20) se présente sous la forme d'une grille d'échappement (20b) comportant plusieurs orifices d'échappement (20c) aptes à évacuer l'air chaud sous pression de la chambre périphérique annulaire interne (16).

8. Lèvre d'entrée d'air (12) de nacelle (10) de moteur d'aéronef selon la revendication précédente **caractérisée en ce que** ledit au moins un dispositif d'obturation passif (22) présente la forme d'une lame (22a) disposée en regard de chaque orifice d'échappement (20a, 20c).

9. Lèvre d'entrée d'air (12) de nacelle (10) de moteur d'aéronef selon la revendication précédente **caractérisée en ce que** ledit au moins un dispositif d'obturation passif (22) comporte autant de lames (22a) que d'orifices d'échappement (20a, 20c).

10. Lèvre d'entrée d'air (12) de nacelle (10) de moteur d'aéronef selon la revendication 7 **caractérisée en ce que** ledit au moins un dispositif d'obturation passif (22) se présente sous la forme d'une plaque unique dont les dimensions sont adaptées pour recouvrir la totalité des orifices d'échappement (20c) de la grille d'échappement (20b).

11. Lèvre d'entrée d'air (12) de nacelle (10) de moteur d'aéronef selon l'une quelconque des revendications précédentes **caractérisée en ce que** ledit au moins un dispositif d'obturation passif (22) comporte au moins une excroissance (22b) adaptée pour obturer ledit au moins un dispositif d'échappement (20, 20a, 20c).

12. Aéronef comprenant une lèvre d'entrée d'air (12) selon l'une des revendications précédentes.

## Patentansprüche

1. Lufteinlasslippe (12) für eine Flugzeugtriebwerksgondel (10), wobei die Lufteinlasslippe mit einer hohlen Vorderkante (14) versehen ist, die eine innere ringförmige Umfangskammer (16) begrenzt, die durch eine innere Trennwand (18) verschlossen ist, in der unter Druck stehende Heißluft zirkuliert, wobei die hohle Vorderkante (14) mit mindestens einer Heißluft-Auslassvorrichtung (20) versehen ist, um die Ableitung des gesamten oder eines Teils des in der ringförmigen Kammer (16) zirkulierenden Heißluftstroms nach außen zu ermöglichen, **dadurch gekennzeichnet, dass** sie mindestens eine passive Verschlussvorrichtung (22) für die mindestens eine Auslassvorrichtung (20) aufweist,
wobei die mindestens eine passive Verschlussvorrichtung (22) zwischen einer Verschlussposition (P1), in der die mindestens eine Verschlussvorrichtung (22) die mindestens eine Auslassvorrichtung (20) verschließt, und einer Öffnungsposition (P2) bewegbar ist, in der die mindestens eine passive Verschlussvorrichtung (22) die mindestens eine Auslassvorrichtung (20) freigibt, wobei die passive Verschlusseinrichtung (22) aus einem Formgedächtnismaterial hergestellt ist.

2. Lufteinlasslippe (12) einer Flugzeugtriebwerksgondel (10) nach Anspruch 1, **dadurch gekennzeichnet, dass** die mindestens eine passive Verschlussvorrichtung (22) in Form eines Teils ausgebildet ist, das zu der mindestens einen Auslassvorrichtung (20) komplementär ist.

3. Lufteinlasslippe (12) einer Flugzeugtriebwerksgondel (10) nach einem der vorhergehenden Ansprüche, **dadurch gekennzeichnet, dass** die mindestens eine passive Verschlussvorrichtung (22) dazu geeignet ist, sich bei Erreichen einer vorbestimmten Übergangstemperatur (T_{D}) zu verformen.

4. Lufteinlasslippe (12) einer Flugzeugtriebwerksgondel (10) nach dem vorhergehenden Anspruch, **dadurch gekennzeichnet, dass** die mindestens eine passive Verschlussvorrichtung (22) dazu geeignet ist, die Verschlussposition (P1) einzunehmen, sobald die Temperatur in der inneren ringförmigen Umfangskammer (16) unter die vorbestimmte Übergangstemperatur (T_{D}) fällt.

5. Lufteinlasslippe (12) einer Flugzeugtriebwerksgondel (10) nach einem der Ansprüche 3 oder 4, **dadurch gekennzeichnet, dass** die mindestens eine passive Verschlussvorrichtung (22) dazu geeignet ist, die Öffnungsposition (P2) einzunehmen, solange die Temperatur in der inneren ringförmigen Umfangskammer (16) über der vorbestimmten Übergangstemperatur (T_{D})+ Δ °C liegt.

6. Lufteinlasslippe (12) einer Flugzeugtriebwerksgondel (10) nach einem der vorhergehenden Ansprüche, **dadurch gekennzeichnet, dass** mindestens eine Auslassvorrichtung (20) in Form einer Auslassöffnung (20a) ausgebildet ist, die dazu geeignet ist, die unter Druck stehende heiße Luft aus der inneren ringförmigen Umfangskammer (16) abzuführen.

7. Lufteinlasslippe (12) einer Flugzeugtriebwerksgondel (10) nach einem der vorhergehenden Ansprüche, **dadurch gekennzeichnet, dass** mindestens eine Auslassvorrichtung (20) in Form eines Auslassgitters (20b) mit mehreren Auslassöffnungen (20c) ausgebildet ist, die dazu geeignet sind, die unter Druck stehende heiße Luft aus der inneren ringförmigen Umfangskammer (16) abzuführen.

8. Lufteinlasslippe (12) einer Flugzeugtriebwerksgondel (10) nach dem vorhergehenden Anspruch, **dadurch gekennzeichnet, dass** die mindestens eine passive Verschlussvorrichtung (22) die Form einer Lamelle (22a) aufweist, die gegenüber jeder Auslassöffnung (20a, 20c) angeordnet ist.

9. Lufteinlasslippe (12) einer Flugzeugtriebwerksgondel (10) nach dem vorhergehenden Anspruch, **dadurch gekennzeichnet, dass** die mindestens eine passive Verschlussvorrichtung (22) ebenso viele Lamellen (22a) wie Auslassöffnungen (20a, 20c) aufweist.

10. Lufteinlasslippe (12) einer Flugzeugtriebwerksgondel (10) nach Anspruch 7, **dadurch gekennzeichnet, dass** die mindestens eine passive Verschlussvorrichtung (22) in Form einer einzigen Platte ausgebildet ist, deren Abmessungen so ausgelegt sind, dass sie alle Auslassöffnungen (20c) des Auslassgitters (20b) abdecken.

11. Lufteinlasslippe (12) einer Flugzeugtriebwerksgondel (10) nach einem der vorhergehenden Ansprüche, **dadurch gekennzeichnet, dass** die mindestens eine passive Verschlussvorrichtung (22) mindestens einen Vorsprung (22b) aufweist, der dazu geeignet ist, die mindestens eine Auslassvorrichtung (20, 20a, 20c) zu verschließen.

12. Flugzeug mit einer Lufteinlasslippe (12) nach einem der vorhergehenden Ansprüche.

## Claims

1. Air intake lip (12) for an aircraft engine nacelle (10), the air intake lip being provided with a hollow leading edge (14) defining an inner annular peripheral chamber (16) closed by an inner partition (18) in which pressurized hot air circulates, said hollow leading edge (14) being provided with at least one hot air exhaust device (20) to allow the discharge to the outside of all or part of said hot air flow circulating in said annular chamber (16), **characterized in that** it comprises at least one passive shut-off device (22) for said at least one exhaust device (20),
where said at least one passive shut-off device (22) is movable between a shut-off position (P1) in which said at least one shut-off device (22) shuts off said at least one exhaust device (20) and an open position (P2) in which said at least one passive shut-off device (22) clears at least one exhaust device (20), said passive shut-off device (22) being made from a shape memory material.

2. Air intake lip (12) of an aircraft engine nacelle (10) according to Claim 1, **characterized in that** said at least one passive shut-off device (22) is in the shape of a part that complements the shape of the at least one exhaust device (20).

3. Air intake lip (12) of an aircraft engine nacelle (10) according to any one of the preceding claims, **characterized in that** said at least one passive shut-off device (22) is capable of deforming from a predetermined transition temperature (T_{D}).

4. Air intake lip (12) of an aircraft engine nacelle (10) according to the preceding claim, **characterized in that** said at least one passive shut-off device (22) is capable of occupying the shut-off position (P1) as soon as the temperature in the inner annular peripheral chamber (16) is less than the predetermined transition temperature (T_{D}).

5. Air intake lip (12) of an aircraft engine nacelle (10) according to either one of Claims 3 and 4, **characterized in that** said at least one passive shut-off device (22) is capable of occupying the open position (P2) as long as the temperature in the inner annular peripheral chamber (16) is greater than the predetermined transition temperature (T_{D})+ Δ°C.

6. Air intake lip (12) of an aircraft engine nacelle (10) according to any one of the preceding claims, **characterized in that** at least one exhaust device (20) takes the form of an exhaust orifice (20a) capable of discharging the pressurized hot air from the inner annular peripheral chamber (16).

7. Air intake lip (12) of an aircraft engine nacelle (10) according to any one of the preceding claims, **characterized in that** at least one exhaust device (20) takes the form of an exhaust grille (20b) comprising a plurality of exhaust orifices (20c) capable of discharging the pressurized hot air from the inner annular peripheral chamber (16).

8. Air intake lip (12) of an aircraft engine nacelle (10) according to the preceding claim, **characterized in that** said at least one passive shut-off device (22) takes the form of a strip (22a) arranged facing each exhaust orifice (20a, 20c).

9. Air intake lip (12) of an aircraft engine nacelle (10) according to the preceding claim, **characterized in that** said at least one passive shut-off device (22) comprises as many strips (22a) as there are exhaust orifices (20a, 20c).

10. Air intake lip (12) of an aircraft engine nacelle (10) according to Claim 7, **characterized in that** said at least one passive shut-off device (22) takes the form of a single plate the dimensions of which are suitable for covering all of the exhaust orifices (20c) of the exhaust grille (20b).

11. Air intake lip (12) of an aircraft engine nacelle (10) according to any one of the preceding claims, **characterized in that** said at least one passive shut-off device (22) comprises at least one protrusion (22b) suitable for shutting off said at least one exhaust device (20, 20a, 20c).

12. Aircraft comprising an air intake lip (12) according to one of the preceding claims.
